# FASCICULE DE BREVET EUROPEEN

(11) **EP 4 310 388 B1**
(45) Date de publication et mention de la délivrance du brevet: **27.08.2025**
(21) Numéro de dépôt: 23215132.4
(22) Date de dépôt: 19.03.2020
(51) Int. Cl.: F17C 5/06

(54) **STATION DE REMPLISSAGE POUR ALIMENTER UNE PLURALITÉ DE VÉHICULES AVEC UN GAZ CONTENANT DE L'HYDROGÈNE**
FÜLLSTATION ZUM VERSORGEN EINER VIELZAHL VON FAHRZEUGEN MIT EINEM WASSERSTOFFHALTIGEN GAS
FILLING STATION FOR SUPPLYING A PLURALITY OF VEHICLES WITH A HYDROGEN-CONTAINING GAS

(30) Priorité: 27.03.2019 FR 1903206
(43) Date de publication de la demande: 24.01.2024
(62) Demande divisionnaire de: 20728115.5
(73) Titulaire: Atawey, 73370 Le Bourget-du-Lac (FR)
(72) Inventeur: DUPUIS, Cédric, 38160 ROMANS (FR)
(74) Mandataire: Cabinet Beaumont

(56) Documents cités:
- EP-A1- 3 249 281
- WO-A1-2019/009745
- FR-A1- 3 033 866
- US-A1- 2009 151 809
- US-A1- 2014 130 938
- US-A1- 2014 352 840
- US-A1- 2017 067 600
- US-A1- 2017 102 110

## Description

### Domaine technique

L'invention porte sur une station de remplissage pour alimenter une pluralité de véhicules avec un gaz contenant de l'hydrogène.

### Arrière-plan technologique de l'invention

Le remplissage rapide en hydrogène gazeux de réservoirs à haute pression embarqués à bord de véhicules à hydrogène est réalisé classiquement par des équilibrages de pression successifs entre une pluralité de contenants à haute pression. Ce remplissage en cascade est obtenu en réalisant une succession d'équilibrages de pression entre, d'une part, le réservoir du véhicule et, d'autre part, des contenants de pression croissante.

On connaît du document US20090151809 une méthode, dite de consolidation de pression, pour augmenter la pression d'un contenant à partir de la pression résiduelle d'un autre contenant. Dans ce document, un compresseur utilisé pour augmenter la pression d'hydrogène gazeux issu d'une source est également utilisé à la sortie des contenants pour augmenter leur pression résiduelle.

On connaît également du document EP3249281 une architecture dans laquelle un compresseur est disposé en sortie d'un contenant pour consolider la pression d'un autre contenant. Dans cette architecture, un compresseur est dédié à l'augmentation de la pression de l'hydrogène en provenance de la source tandis qu'un autre compresseur est dédié à la consolidation de la pression.

L'augmentation constante du parc de véhicules à hydrogène et sa diversification à des modes de transports différents des automobiles tels que les camions, les bus ou encore les navires rend nécessaire une architecture de station qui puisse répondre à des demandes en alimentation de plus en plus variables et importantes.

Les architectures présentées dans l'état de la technique, quoiqu'aptes à délivrer dans un temps court (quelques minutes) le remplissage d'un réservoir, ne présentent pas la versatilité et la modularité adéquates pour répondre à tous ces besoins.

En outre, ces architectures ne présentent pas la robustesse permettant de garantir une réponse satisfaisante et ininterrompue en cas de défaillance de l'un des composants de la station, et notamment du compresseur ou du contenant.

### Objet de l'invention

La présente invention vise à pallier au moins en partie aux inconvénients précités de l'état de la technique, en proposant une architecture de station de remplissage qui soit évolutive, versatile, et adaptable à une grande variété de besoins.

### Brève description de l'invention

Pour ce faire, la présente invention propose une station de remplissage pour alimenter une pluralité de véhicules avec du gaz contenant de l'hydrogène issu d'une source et comportant :
- un bloc de stockage comprenant une pluralité de contenants pour stocker le gaz à haute pression ;
- un bloc de compression comprenant une pluralité de compresseurs pour augmenter la pression du gaz à destination du bloc de stockage ;
- un bloc d'alimentation comprenant au moins un alimentateur destiné à alimenter un véhicule de la pluralité de véhicules.

La présente invention est remarquable en ce qu'elle comporte en outre :
- un circuit de stockage pour faire circuler le gaz du bloc de compression vers le bloc de stockage, le circuit de stockage comprenant un réseau de conduits de stockage reliant chaque compresseur du bloc de compression à chaque contenant du bloc de stockage et au moins un distributeur de stockage pour sélectivement associer les compresseurs et les contenants ;
- un circuit de recharge pour faire circuler le gaz du bloc de stockage vers le bloc de compression, le circuit de recharge comprenant un réseau de conduits de recharge reliant chaque contenant du bloc de stockage à chaque compresseur du bloc de compression et au moins un distributeur de recharge pour sélectivement associer les contenants et les compresseurs ;
- des moyens de commande pour commander les distributeurs de stockage et de recharge.

Une station de remplissage conforme à l'invention présente l'avantage, contrairement à l'état de la technique, de présenter une pluralité de composants à l'intérieur de chaque bloc. La taille de chaque bloc peut aisément être adaptée à l'échelle des besoins liés à la station en ajoutant ou en ôtant des composants.

Selon d'autres caractéristiques avantageuses et non limitatives de l'invention, prises seules ou selon toute combinaison techniquement réalisable :
- le bloc d'alimentation comprend une pluralité d'alimentateurs ;
- la station de remplissage comporte également un circuit d'alimentation pour faire circuler le gaz du bloc de stockage vers le bloc d'alimentation, le circuit d'alimentation comprenant un réseau de conduits d'alimentation reliant chaque contenant du bloc de stockage à chaque alimentateur du bloc d'alimentation et au moins un distributeur d'alimentation pour sélectivement associer les contenants et les alimentateurs, les moyens de commande étant également pour commander le distributeur d'alimentation ;
- la station de remplissage comprend en outre un bloc de refroidissement comprenant au moins un refroidisseur pour diminuer la température du gaz ;
- le bloc de refroidissement comprend une pluralité de refroidisseurs ;
- la station de remplissage comporte également un circuit de refroidissement pour faire circuler le gaz du bloc d'alimentation vers le bloc de refroidissement, le circuit de refroidissement comprenant un réseau de conduits de refroidissement reliant chaque alimentateur du bloc d'alimentation à chaque refroidisseur du bloc de refroidissement et au moins un distributeur de refroidissement pour sélectivement associer les contenants et les alimentateurs, les moyens de commande étant également pour commander le distributeur de refroidissement ;
- la station de remplissage comporte également un circuit de refroidissement pour faire circuler le gaz du bloc de stockage vers le bloc de refroidissement, le circuit de refroidissement comprenant un réseau de conduits de refroidissement reliant chaque contenant du bloc de stockage à chaque refroidisseur du bloc de refroidissement et au moins un distributeur de refroidissement pour sélectivement associer les contenants et les refroidisseurs, les moyens de commande étant également pour commander le distributeur de refroidissement ;
- la station de remplissage comporte également un circuit d'alimentation pour faire circuler le gaz du bloc de stockage vers le bloc d'alimentation, le circuit d'alimentation comprenant un réseau de conduits d'alimentation reliant chaque contenant du bloc de stockage à chaque alimentateur du bloc d'alimentation et au moins un distributeur d'alimentation pour sélectivement associer les refroidisseurs et les alimentateurs, les moyens de commande étant également pour commander le distributeur d'alimentation ;
- la station de remplissage comprend en outre un bloc de fourniture, comprenant au moins une unité de fourniture de gaz, et formant la source de laquelle est issu le gaz ;
- le bloc de fourniture comprend une pluralité d'unités de fourniture de gaz et la station de remplissage comporte un circuit de compression pour faire circuler le gaz du bloc de fourniture vers le bloc de compression, le circuit de compression comprenant un réseau de conduits de compression reliant chaque unité de fourniture de gaz du bloc de fourniture à chaque compresseur du bloc de compression et au moins un distributeur de compression pour sélectivement associer les unités de fourniture de gaz et les compresseurs, les moyens de commande étant également pour commander le distributeur de compression ;
- au moins une unité de fourniture de gaz du bloc de fourniture est une unité de production d'hydrogène fixe ou mobile ;
- l'unité de production d'hydrogène est un électrolyseur ;
- au moins une unité de fourniture de gaz du bloc de fourniture est une unité de stockage mobile ;
- la station de remplissage comprend au moins un autre contenant, distinct de la pluralité de contenants du bloc de stockage, l'autre contenant n'étant pas relié de manière systématique à chaque compresseur de la pluralité de compresseurs du bloc de compression ;
- la station de remplissage comprend au moins un autre compresseur, distinct de la pluralité de compresseurs du bloc de compression, l'autre compresseur n'étant pas relié de manière systématique à chaque contenant de la pluralité de contenants du bloc de stockage.

### Description des dessins

D'autres avantages et particularités de l'invention apparaîtront à la lecture de la description détaillée de mises en œuvre et de modes de réalisation nullement limitatifs, au regard de dessins annexés sur lesquels :
[Fig. 1] La figure 1 représente une vue schématique illustrant la structure d'une station de remplissage selon un premier mode de mise en œuvre conforme à l'invention ;
[Fig. 2] La figure 2 représente une vue schématique illustrant la structure d'une station de remplissage selon un deuxième mode de mise en œuvre conforme à l'invention ;
[Fig. 3] La figure 3 représente une vue schématique illustrant la structure d'une station de remplissage selon un troisième mode de mise en œuvre conforme à l'invention ;
[Fig. 4a] La figure 4a représente un chronogramme de l'évolution de la pression finale délivrée par les alimentateurs, la pression du gaz stocké dans les contenants et un chronogramme de l'évolution du nombre et de la fonction des compresseurs d'une station durant cinq jours selon un contre-exemple non conforme à l'invention ;
[Fig. 4b] La figure 4b représente un chronogramme de l'évolution de la pression finale délivrée par les alimentateurs, la pression du gaz stocké dans les contenants durant le cinquième jour selon un contre-exemple non conforme à l'invention ;
[Fig. 5a] La figure 5a représente un chronogramme de l'évolution de la pression finale délivrée par les alimentateurs, la pression du gaz stocké dans les contenants et un chronogramme du nombre et de la fonction des compresseurs d'une station durant cinq jours selon un exemple conforme à l'invention ;
[Fig. 5b] La figure 5b représente un chronogramme de l'évolution de la pression finale délivrée par les alimentateurs, la pression du gaz stocké dans les contenants durant le cinquième jour selon un exemple conforme à l'invention.

### Description détaillée de l'invention

Par souci de simplification de la description à venir, les mêmes références sont utilisées pour des éléments identiques ou assurant la même fonction dans les différents modes de mise en œuvre de l'invention.

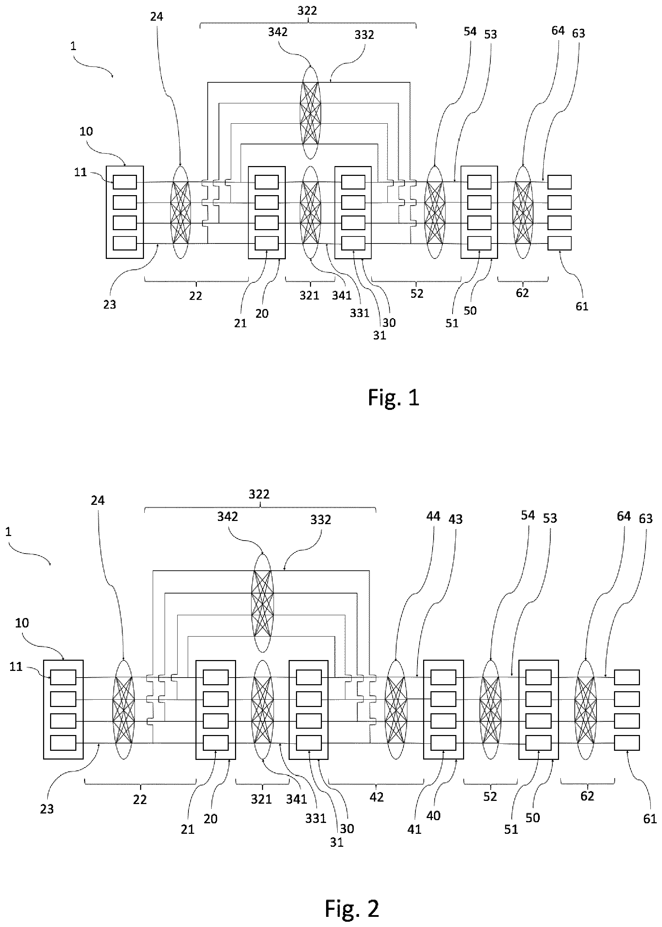

Les figures 1 à 3 représentent des architectures d'une station de remplissage 1 conformes à la présente invention.

Une telle station de remplissage 1 est destinée à alimenter une pluralité de véhicules 61 avec du gaz contenant de l'hydrogène issu d'une source. Les véhicules 61 peuvent notamment être des véhicules terrestres tels que des voitures, des bus, des camions, des trains, mais également des véhicules maritimes tels que des navires ou des véhicules aériens comme des dirigeables. Le gaz peut être du dihydrogène pur, ou un mélange de gaz comprenant du dihydrogène tel qu'un mélange gaz naturel-dihydrogène par exemple, comprenant au moins 5% de dihydrogène, et préférentiellement au moins 20% de dihydrogène.

A cet effet, une station de remplissage 1 conforme à la présente invention peut comprendre un bloc de fourniture 10 comportant au moins une unité de fourniture de gaz 11 et formant la source de laquelle est issu le gaz.

La source peut être une unité de production d'hydrogène, pouvant être fixe ou mobile. En particulier, la source peut être un électrolyseur, permettant alors de produire *in situ* du dihydrogène gazeux par électrolyse de l'eau. Avantageusement, et de manière non limitative, l'électrolyseur est un électrolyseur de grande capacité, capable de générer de 10 à 1000 Nm3/h, pour fournir à la station de remplissage du gaz à moyenne pression. Par gaz à moyenne pression, on entend un gaz présentant une pression comprise entre 50 mbar et 60 bar. Préférentiellement, l'électrolyseur fournit à la station de remplissage du gaz présentant une pression comprise entre 10 et 30 bar, voire une pression égale à 30 bar.

Alternativement, la source peut être une simple unité de stockage de gaz mobile, telle qu'une citerne mobile ou une bouteille. Une telle citerne peut être disposée sur tout moyen de transport tel qu'un camion, un train ou encore un bateau pour acheminer le gaz d'une source de production extérieure jusqu'à la station.

L'unité de stockage de gaz mobile peut alors contenir du gaz à moyenne ou haute pression. Par gaz à haute pression, on entend un gaz présentant une pression supérieure à 60 bar, par exemple 200, 350, 500 ou 1000 bar.

De manière avantageuse, le bloc de fourniture 10 comprend une pluralité d'unité de fourniture de gaz 11.

Toutefois, la présente invention n'est nullement limitée à de telles configurations. Une station de remplissage conforme à la présente invention peut également être alimentée en partie par une source extérieure de production d'hydrogène, par l'intermédiaire de moyens de transport du gaz extérieurs à la station tels que des remorques (« trailers » selon l'expression anglo-saxonne fréquemment employée) ou un gazoduc. La station de remplissage peut également ne pas comprendre d'unité de fourniture de gaz 11 et être alimentée exclusivement par une telle source extérieure.

Quelle que soit la configuration de la source, et poursuivant la description de la figure 1, une station de remplissage 1 conforme à la présente invention comporte un bloc de stockage 30 comprenant une pluralité de contenants 31 pour stocker le gaz à haute pression.

Avantageusement, et de manière non limitative, chaque contenant 31 du bloc de stockage 30 est apte à stocker du gaz à une pression supérieure à 200 bar, préférentiellement à une pression maximale de 500 bar voire 1000 bar. Chaque contenant 31 peut contenir un volume de gaz à haute pression supérieur à 10 L, de préférence entre 5 et 50 m³.

Un contenant peut être constitué d'une ou de plusieurs bouteilles de stockage.

De manière particulièrement avantageuse, le bloc de stockage 30 comprend au moins quatre contenants 31, voire au moins cinq contenants 31 ou plus.

La présence d'une pluralité de contenants 31 permet notamment d'effectuer des équilibrages de pression successifs, par exemple pour réaliser des remplissages en cascade tels qu'ils ont été définis en introduction.

La station de remplissage 1 comporte en outre un bloc de compression 20 comprenant une pluralité de compresseurs 21 pour augmenter la pression du gaz à destination du bloc de stockage 30.

Chaque compresseur 21 permet typiquement d'augmenter la pression du gaz d'une pression préférentiellement comprise entre 10 et 30 bar à une pression pouvant aller jusqu'à 500 bar, voire jusqu'à 1000 bar, pour alimenter un contenant 31 en gaz à haute pression.

Avantageusement, le bloc de compression 20 comprend au moins quatre compresseurs 21, voire au moins cinq compresseurs 21 ou plus.

Bien entendu, et bien que l'on ait représenté sur les figures 1 à 3 un bloc de compression 20 et un bloc de stockage 30 comprenant chacun quatre constituants, ce nombre n'est aucunement limitatif. Chaque bloc peut également contenir un nombre différent de constituants.

La station de remplissage comporte également un circuit de stockage 321 pour faire circuler le gaz du bloc de compression 20 vers le bloc de stockage 30. Le circuit de stockage 321 comprend un réseau de conduits de stockage 331 reliant chaque compresseur 21 du bloc de compression 20 à chaque contenant 31 du bloc de stockage 30. Le circuit de stockage 321 comprend également au moins un distributeur de stockage 341 pour sélectivement associer les compresseurs 21 et les contenants 31.

Par exemple, le distributeur de stockage 341 peut être une vanne disposée sur un conduit de stockage 331 et permettant d'ouvrir ou fermer le conduit de stockage 331. Dans ce cas, une vanne peut être disposée sur chaque conduit de stockage 331.

Alternativement, le distributeur de stockage 341 peut être une vanne à plusieurs positions, apte à opérer n'importe quelle combinaison d'ouverture et de fermeture de chaque conduit de stockage 331.

Quel que soit le type de distributeur de stockage 341, une station de remplissage 1 conforme à la présente invention comprend en outre des moyens de commande pour commander le(s) distributeur(s) de stockage 341.

Les moyens de commande peuvent être configurés pour actionner la fermeture et/ou l'ouverture de chaque conduit de stockage 331 du réseau de conduits de stockage 331 soit sur instruction d'un opérateur, soit selon des conditions préconfigurées. A cet effet, les moyens de commande peuvent comprendre un calculateur préalablement configuré pour réaliser ces opérations. Ce calculateur peut être intégré dans une unité de commande de la station 1.

Le circuit de stockage 321 permet ainsi d'alimenter la pluralité de contenants 31 en gaz à haute pression, de préférence de l'ordre de 400 à 500 bar, voire de 700 bar à 1000 bar. Les distributeurs de stockage 341 permettent de sélectionner à chaque instant, suivant des conditions prédéterminées, le ou les compresseurs 21 utilisés pour alimenter un contenant 31 donné, ainsi que le ou les contenants 31 à alimenter en gaz haute pression.

Une station de remplissage 1 conforme à la présente invention comprend également un circuit de recharge 322 pour faire circuler le gaz du bloc de stockage 30 vers le bloc de compression 20. A cet effet, le circuit de recharge 322 comprend un réseau de conduits de recharge 332 reliant chaque contenant 31 du bloc de stockage 30 à chaque compresseur 21 du bloc de stockage 30. Le circuit de recharge 322 comprend en outre au moins un distributeur de recharge 342 pour sélectivement associer les contenants 31 et les compresseurs 21.

Les distributeurs de recharge 342 peuvent être similaires aux distributeurs de stockage 341 précédemment décrits.

Quel que soit le type de distributeur de recharge 342, les moyens de commande sont également configurés pour commander le(s) distributeur(s) de recharge 342.

Le circuit de recharge 322 permet ainsi de réaliser une consolidation de pression, c'est-à-dire de faire circuler du gaz depuis un contenant 31 donné vers un ou plusieurs compresseurs 21, qui augmente (nt) alors la pression du gaz reçu pour alimenter à nouveau un ou plusieurs contenants 31 à travers le circuit de stockage 321. Les distributeurs de recharge 342 permettent de sélectionner à chaque instant les contenants 31 et les compresseurs 21 à utiliser pour réaliser la consolidation de pression.

De la sorte, une station de recharge 1 conforme à l'invention permet de reconfigurer dynamiquement et selon le besoin l'association des compresseurs 21 du bloc de compression 20 avec les contenants 31 du bloc de stockage 30.

En premier lieu, cette possibilité de reconfiguration permet de faire évoluer l'utilisation de chaque compresseur 21 du bloc de compression 20 en fonction des besoins. Un tel avantage est notamment explicité dans l'exemple développé dans la suite de cette description.

Une telle possibilité permet également d'augmenter la redondance des matériels constituant la station 1. On entend par redondance le fait de disposer de plusieurs exemplaires d'un même équipement dans le but d'augmenter la capacité totale ou les performances d'un système et/ou de réduire le risque de panne. L'augmentation de la redondance permet d'améliorer la fiabilité d'une station, mais nécessite classiquement de multiplier le nombre de chaque exemplaire. Ainsi, il est généralement prévu, pour chaque composant fonctionnel, un second composant identique assurant uniquement la redondance. La possibilité de reconfiguration offerte par l'invention permet à plusieurs composants de pouvoir participer à une même solution mécanique, augmentant la redondance. Pour autant, un même composant pouvant dynamiquement être alloué à une fonction ou une autre, il est possible d'augmenter la redondance des matériels constituant la station 1 sans doubler le nombre de composants nécessaires pour assurer cette redondance.

Une station 1 conforme à la présente invention présente ainsi l'avantage de présenter une fiabilité supérieure à une station dont chaque composant aurait une fonctionnalité dédiée, chaque composant d'un bloc pouvant être employé en complément ou en remplacement d'un autre.

En particulier, la possibilité de reconfiguration dynamique offerte par une telle station permet d'assurer la continuité d'activité de la station même face à une nécessité de maintenance. Il peut tout aussi bien s'agir d'une maintenance préventive, c'est-à-dire une nécessité d'entretien d'un composant avant qu'il ne soit détérioré, ou d'une maintenance curative, c'est-à-dire la défaillance d'un composant.

Ainsi, si l'un des composants est indisponible, les moyens de commande du bloc correspondant peuvent reconfigurer le circuit correspondant et commander les distributeurs pour pallier la carence du composant indisponible en ajustant le fonctionnement des autres composants du bloc au besoin.

Bien entendu, une station de remplissage 1 conforme à la présente invention peut également comprendre des contenants 31 et compresseurs 21 n'appartenant pas aux blocs précédemment décrits. En particulier, la station peut comprendre au moins un autre contenant, distinct de la pluralité de contenants 31 du bloc de stockage 30, l'autre contenant n'étant pas nécessairement fluidiquement reliable à tous les autres compresseurs 21 compris dans la station 1, et notamment à chaque compresseur 21 de la pluralité de compresseurs 21 du bloc de compression 20. De la même manière, la station 1 peut comprendre au moins un autre compresseur 21, distinct de la pluralité de compresseurs 21 du bloc de compression 20, l'autre compresseur 21 n'étant pas fluidiquement reliable à tous les autres contenants compris dans la station 1, et notamment à chaque contenant 31 de la pluralité de contenants 31 du bloc de stockage 30.

Le volume des contenants peut être choisi librement, et n'est aucunement limité à des volumes spécifiques.

En particulier, au moins un autre contenant peut être prévu pour contenir un volume de gaz plus faible que ceux évoqués précédemment, par exemple de l'ordre de 1 L. De tels volumes peuvent notamment être utilisés dans le cadre de méthodes de remplissage dites par compression directe, par opposition au remplissage en cascade. Dans le cadre de cette méthode, du gaz, généralement issu d'un contenant du bloc de stockage ou directement du bloc de fourniture 10, circule jusqu'à un compresseur. Le compresseur augmente la pression du gaz et le fait circuler à travers le contenant de faible volume jusqu'au réservoir du véhicule pour l'alimenter. Le réservoir est ainsi alimenté au fur et à mesure du fonctionnement du compresseur.

Une telle méthode présente l'avantage de ne pas nécessiter de contenant apte à stocker du gaz à des pressions supérieures à 500 bar. Le gaz comprimé par le compresseur alimente directement le réservoir du véhicule en circulant temporairement à travers le contenant de faible volume, qui a pour but de lisser le niveau de pression en sortie du compresseur. A cet effet, un tel contenant peut être constitué d'une ou plusieurs bouteilles, mais il peut également être simplement un conduit de diamètre et de longueur adéquats.

Cette méthode présente également l'avantage par rapport au remplissage en cascade de ne pas créer lors du remplissage du réservoir d'échauffement dans le réservoir par l'effet de la détente quasi-adiabatique décrite dans la suite de la description.

Revenant à la description des figures 1 à 3, une partie au moins des compresseurs 21 du bloc de compression 20 est reliée à la source.

La station de remplissage 1 comprend également un circuit de compression 22 pour faire circuler le gaz du bloc de fourniture 10 vers le bloc de compression 20.

Dans le cas où la station de remplissage 1 comporte un bloc de fourniture 10 comprenant une pluralité d'unités de fourniture de gaz 11, le circuit de compression 22 comprend un réseau de conduits de compression 23 reliant chaque unité de fourniture de gaz 11 à chaque compresseur 21 du bloc de compression 20. Le circuit de compression 22 comprend en outre au moins un distributeur de compression 24 pour sélectivement associer les unités de fourniture de gaz 11 aux compresseurs 21.

Les distributeurs de compression 24 peuvent être similaires aux distributeurs de stockage 341 précédemment décrits.

Quel que soit le type de distributeur de compression 24, les moyens de commande sont également configurés pour commander le(s) distributeur(s) de compression 24.

De la sorte, la station de remplissage 1 permet également de reconfigurer dynamiquement, selon les besoins, la quantité de gaz issue de la source pour alimenter le bloc de stockage 30 via le bloc de compression 20.

Revenant à la description des figures 1 à 3, une station de remplissage 1 conforme à la présente invention comprend également un bloc **d'alimentation** 50 comprenant au moins un alimentateur 51 destiné à alimenter un véhicule 61 parmi la pluralité de véhicules 61 à alimenter.

Dans le cadre de la présente description, on entend par alimentateur 51 un moyen permettant de réguler la montée en pression du réservoir du véhicule 61, c'est-à-dire gérer la vitesse d'alimentation du véhicule 61 en gaz.

Une telle régulation est nécessaire afin d'éviter un échauffement trop important du réservoir du véhicule 61 en cas d'alimentation trop rapide. En effet, l'alimentation d'un réservoir en gaz s'effectue par le phénomène bien connu d'équilibrage de pression entre un volume contenant du gaz à haute pression, celui provenant des contenants 31, et un volume à plus faible pression, celui du réservoir qui présente typiquement une pression à vide de 50 bar. L'augmentation de pression dans le réservoir, qui forme une compression quasi-adiabatique en raison de la rapidité de la compression, induit une augmentation de la température. A ce phénomène s'ajoute également celui de détente quasi adiabatique due aux pertes de charges dans les conduits jusqu'à l'entrée du réservoir. Il est également appelé effet Joule-Thomson et peut induire une augmentation de la température dans certaines conditions de température et pression en particulier pour l'hydrogène. Ces augmentations de température, si elles ne sont pas maîtrisées sont susceptibles de dépasser la résistance thermique du réservoir, qui avoisine généralement 85°C. Ce dépassement conduit à un risque d'endommagement du réservoir.

A l'inverse, une alimentation trop lente fait disparaître l'avantage important des véhicules à hydrogène 61, à savoir leur remplissage rapide, typiquement moins de cinq minutes, par rapport aux véhicules ayant une autre source d'énergie.

Par exemple, un alimentateur 51 peut comprendre un dispositif de calcul préconfiguré pour délivrer une commande de régulation et contrôler le débit d'alimentation d'un véhicule 61. Ce dispositif de calcul peut également être intégré dans l'unité de commande de la station 1.

De manière avantageuse, le bloc d'alimentation 50 comprend une pluralité d'alimentateurs 51 afin de pouvoir servir simultanément une pluralité de véhicules 61.

Selon un premier mode de mise en œuvre, représenté sur la figure 1, la station de remplissage 1 comporte également un circuit d'alimentation 52 pour faire circuler le gaz du bloc de stockage 30 vers le bloc d'alimentation 50.

Si le bloc d'alimentation 50 comprend une pluralité d'alimentateurs 51, le circuit d'alimentation 52 comprend un réseau de conduits d'alimentation 53 reliant chaque contenant 31 du bloc de stockage 30 à chaque alimentateur 51 du bloc d'alimentation 50. Le circuit d'alimentation 52 comprend en outre au moins un distributeur d'alimentation 54 pour sélectivement associer les contenants 31 et les alimentateurs 51.

Les distributeurs d'alimentation 54 peuvent être similaires aux distributeurs de stockage 341 précédemment décrits.

Quel que soit le type de distributeur d'alimentation 54, les moyens de commande sont également configurés pour commander le(s) distributeur(s) d'alimentation 54.

Dans ce premier mode de mise en œuvre, la station de remplissage 1 comprend également un circuit de remplissage 62, situé en aval du bloc d'alimentation 50 pour faire remplir les véhicules à alimenter avec le gaz issu du bloc d'alimentation 50, suivant la régulation imposée par ce dernier. Le circuit de remplissage 62 comprend un réseau de conduits de remplissage 63 reliant chaque alimentateur 51 à un moyen de remplissage pour remplir un véhicule 61, tel qu'un pistolet de remplissage.

La station 1 comprend ainsi une pluralité de moyens de remplissage, chaque moyen de remplissage étant relié à chaque alimentateur 51 du bloc d'alimentation 50 par l'intermédiaire du circuit de remplissage 62, afin de pouvoir remplir indépendamment le réservoir de chaque véhicule 61 de la pluralité de véhicules à alimenter 61.

Le circuit de remplissage 62 comprend en outre au moins un distributeur de remplissage 64 pour sélectivement associer les alimentateurs 51 et les moyens de remplissage.

Les distributeurs de remplissage 64 peuvent être similaires aux distributeurs de stockage 341 précédemment décrits.

Quel que soit le type de distributeur de remplissage 64, les moyens de commande sont également configurés pour commander le(s) distributeur(s) de remplissage 64.

Selon un deuxième mode de mise en œuvre, représenté sur la figure 2, la station de remplissage 1 comprend en outre un bloc de refroidissement 40 en amont du bloc d'alimentation 50, comprenant au moins un refroidisseur 41 pour diminuer la température du gaz en provenance du bloc de stockage 30. Le bloc de refroidissement 40 est ainsi situé entre le bloc de stockage 30 et le bloc d'alimentation 50, le gaz provenant du bloc de stockage 30 circulant alors à travers le bloc de refroidissement 40 avant de rejoindre le bloc d'alimentation 50.

Par refroidisseur, on entend dans la présente description un moyen pour diminuer la température du gaz circulant dans un conduit.

La structure du refroidisseur 41 est bien connue en soi, et peut typiquement comprendre une cuve tampon destinée à stocker et réguler un liquide de refroidissement, par exemple de l'azote liquide, ainsi qu'un système de gestion électrique pouvant être relié à l'unité de commande de la station 1.

Le refroidissement du gaz permet de diminuer sa température initiale avant que sa délivrance dans le réservoir du véhicule 61 ne conduise à l'augmenter. De la sorte, il est possible de contrôler cette augmentation de température afin de parvenir à une température supportable par le réservoir à la fin de son remplissage.

Typiquement, dans le cas du remplissage d'une voiture à hydrogène, le refroidissement du dihydrogène à une température initiale de -40°C permet d'amener celui-ci à une température dans le réservoir voisine de la température ambiante, ou du moins inférieure à la résistance thermique du réservoir, à l'issue d'un remplissage de 3 à 5 minutes. Le refroidissement du gaz permet donc d'accélérer le remplissage du réservoir sans risquer sa détérioration.

Bien entendu, l'invention n'est nullement limitée au type de refroidisseur 41 présenté, et peut comprendre tout moyen permettant de diminuer la température du gaz provenant du bloc de stockage 30.

La station de remplissage 1 comprend également un circuit de refroidissement 42 pour faire circuler le gaz du bloc de stockage 30 vers le bloc de refroidissement 40.

Préférentiellement, le bloc de refroidissement 40 comprend une pluralité de refroidisseurs 41. Dans ce cas, le circuit de refroidissement 42 comprend un réseau de conduits de refroidissement 43 reliant chaque contenant 31 du bloc de stockage 30 à chaque refroidisseur 41 du bloc de refroidissement 40. Le circuit de refroidissement 42 comprend en outre au moins un distributeur de refroidissement 44 pour sélectivement associer les contenants 31 et les refroidisseurs 41.

Les distributeurs de refroidissement 44 peuvent être similaires aux distributeurs de stockage 341 précédemment décrits.

Quel que soit le type de distributeur de refroidissement 44, les moyens de commande sont également configurés pour commander le(s) distributeur(s) de refroidissement 44.

Dans ce deuxième mode de mise en œuvre, la station de remplissage 1 comprend également un circuit d'alimentation 52 pour faire circuler le gaz du bloc de refroidissement 40 vers le bloc d'alimentation 50. Si la station 1 comprend une pluralité d'alimentateurs 51, le circuit d'alimentation 52 comprend un réseau de conduits d'alimentation 53 reliant chaque refroidisseur 41 du bloc de refroidissement 40 à chaque alimentateur 51 du bloc d'alimentation 50. Le circuit d'alimentation 52 comprend également au moins un alimentateur 51 pour sélectivement associer les refroidisseurs 41 et les alimentateurs 51.

Les distributeurs d'alimentation 54 peuvent être similaires aux distributeurs de stockage 341 précédemment décrits.

Quel que soit le type de distributeur d'alimentation 54, les moyens de commande sont également configurés pour commander le(s) distributeur(s) d'alimentation 54.

Le circuit de remplissage 62 ainsi que les moyens de remplissage peuvent ensuite être identiques à ceux décrits dans le premier mode de mise en œuvre.

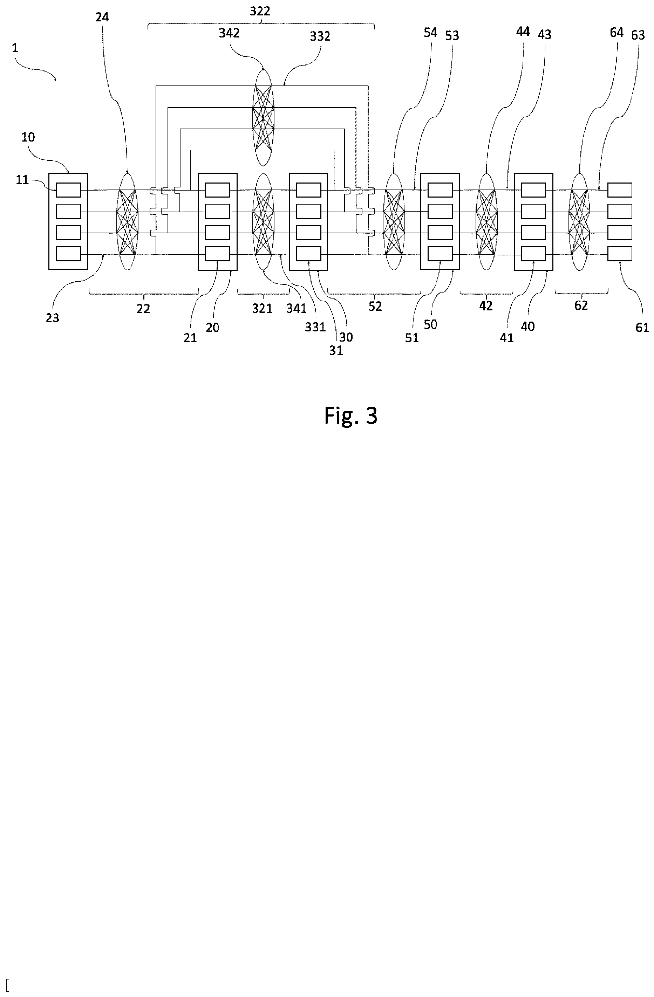

Selon un troisième mode de mise en œuvre, représenté sur la figure 3, le bloc de refroidissement 40 est situé en aval du bloc d'alimentation 50, et comprend au moins un refroidisseur 41 pour diminuer la température du gaz en provenance du bloc d'alimentation 50. Le bloc de refroidissement 40 est ainsi situé entre le bloc d'alimentation 50 et la pluralité de véhicules 61 à alimenter. Le gaz provenant du bloc d'alimentation 50 circule alors dans le bloc de refroidissement 40 pour y être refroidi avant d'alimenter les véhicules 61.

Dans ce mode de mise en œuvre, le circuit d'alimentation 52 peut être identique à celui présenté dans le premier mode de mise en œuvre.

Préférentiellement, le bloc de refroidissement 40 comprend une pluralité de refroidisseurs 41. Dans ce cas, la station de remplissage comprend un circuit de refroidissement 42 pour faire circuler le gaz du bloc d'alimentation 50 vers le bloc de refroidissement 40. Le circuit de refroidissement 42 comprend un réseau de conduits de refroidissement 43 reliant chaque alimentateur 51 du bloc d'alimentation 50 à chaque refroidisseur 41 du bloc de refroidissement 40. Le circuit de refroidissement 42 comprend en outre au moins un distributeur de refroidissement 44 pour sélectivement associer les alimentateurs 51 et les refroidisseurs 41.

Les distributeurs de refroidissement 44 peuvent être similaires aux distributeurs de stockage 341 précédemment décrits.

Quel que soit le type de distributeur de refroidissement 44, les moyens de commande sont également configurés pour commander le(s) distributeur(s) de refroidissement 44.

Dans ce troisième mode de mise en œuvre, la station de remplissage comprend également un circuit de remplissage 62, situé en aval du bloc de refroidissement 40 pour remplir les véhicules à alimenter avec le gaz refroidi dans le bloc de refroidissement 40, suivant la régulation imposée par le bloc d'alimentation 50 situé en amont. Le circuit de remplissage 62 comprend un réseau de conduits de remplissage 63 reliant chaque alimentateur 51 à un moyen de remplissage pouvant être similaire à celui décrit dans le premier mode de mise en œuvre.

La station 1 comprend ainsi une pluralité de moyens de remplissage, chaque moyen de remplissage étant relié à chaque refroidisseur 41 du bloc de refroidissement 40 par l'intermédiaire du circuit de remplissage 62, afin de pouvoir remplir indépendamment le réservoir de chaque véhicule 61 de la pluralité de véhicules à alimenter 61.

Le circuit de remplissage 62 comprend en outre au moins un distributeur de remplissage 64 pour sélectivement associer les alimentateurs 51 et les moyens de remplissage.

Les distributeurs de remplissage 64 peuvent être similaires aux distributeurs de stockage 341 précédemment décrits.

Quel que soit le type de distributeur de remplissage 64, les moyens de commande sont également configurés pour commander le(s) distributeur(s) de remplissage 64.

### Contre-exemple

Une station de remplissage selon un contre-exemple non conforme à l'invention est alimentée en hydrogène par une source ayant un débit maximal de 86 kg/h, soit au maximum 2000 kg/jour. Une flotte de cent bus nécessitant une moyenne de 20 kg par recharge avec une pression finale visée de 405 bar constitue la pluralité de véhicules à alimenter. Dans ce contre-exemple, la station comprend six alimentateurs, cinq compresseurs, ainsi que quatre contenants à 450 bar possédant un volume respectif de 41, 20, 20 et 7 m³. La station comprend également un contenant situé directement en sortie de la source, destiné à recueillir le gaz à moyenne pression produit par celle-ci, et le fournir aux compresseurs. Par souci de simplification, aucun bloc de refroidissement n'a été prévu.

Dans ce contre-exemple, la station comprend un bloc d'alimentateurs constitué des six alimentateurs, un bloc de stockage constitué des quatre contenants, un premier bloc de compression comprenant trois compresseurs dédiés à la compression du gaz issu de la source et à destination du bloc de stockage, ainsi qu'un second bloc de compression comprenant deux compresseurs dédiés à la consolidation de pression, c'est-à-dire à la compression du gaz issu du bloc de stockage et à destination du bloc de stockage.

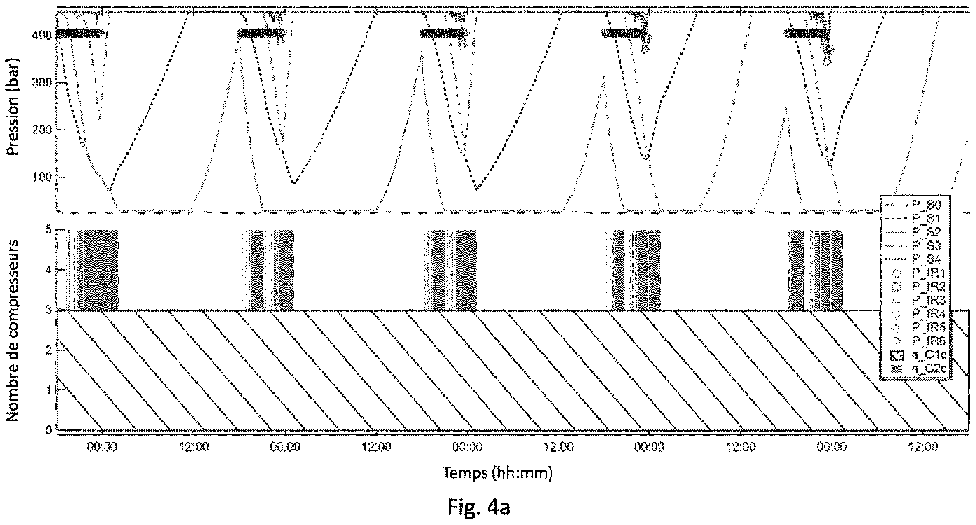

La figure 4a représente deux chronogrammes. Le premier (situé en haut de la figure) illustre l'évolution de la pression finale délivrée par chacun des six alimentateurs (notée P_fR1 à P_fR6), ainsi que de la pression de chaque contenant (P_S0 à P_S4). Le second (situé en bas de la figure) illustre l'évolution temporelle de l'utilisation de chaque compresseur. n_C1c représente le nombre de compresseurs en fonctionnement utilisés pour compresser le gaz issu de la source, tandis que n_C2c représente le nombre de compresseurs en fonctionnements utilisés pour la consolidation de pression. Les résultats sur cinq jours de fonctionnement de la station sont illustrés sur la figure 4a. L'axe des abscisses représente le temps (en hh:mm).

On constate que les trois compresseurs du premier bloc de compression fonctionnent en permanence pour la compression du gaz issu de la source (n_C1c). En revanche, les deux compresseurs du second bloc de compression fonctionnent par intermittence, et simultanément au cours des cinq jours, pour assurer la consolidation de pression (n_C2c).

On constate également qu'au fil des jours, la station ne parvient pas à maintenir la pression finale délivrée par les alimentateurs au niveau de celle attendue. En effet, on voit que les points P_fR1 à P_fR6, qui désignent la pression finale respectivement atteinte par les six alimentateurs, et qui parviennent effectivement tous à la pression de 405 bar à l'issue du premier jour, décroissent au fil des jours, ne sont plus tous regroupés à une valeur de 405 bar dès le deuxième jour, plusieurs véhicules étant remplis à une pression de moins de 400 bar. On constate ensuite que ce phénomène s'accentue au cours des jours suivants.

Ce phénomène est à mettre en relation avec la pression effectivement atteinte à l'intérieur de chaque contenant du bloc de stockage. On constate en effet que le maximum de pression dans le deuxième contenant (P_S2) décroit de jour en jour, passant de 450 bar au début du premier jour à 400 bar à la fin du premier jour, puis à 350 bar à l'issue du deuxième jour, et 250 bar à l'issue du troisième jour.

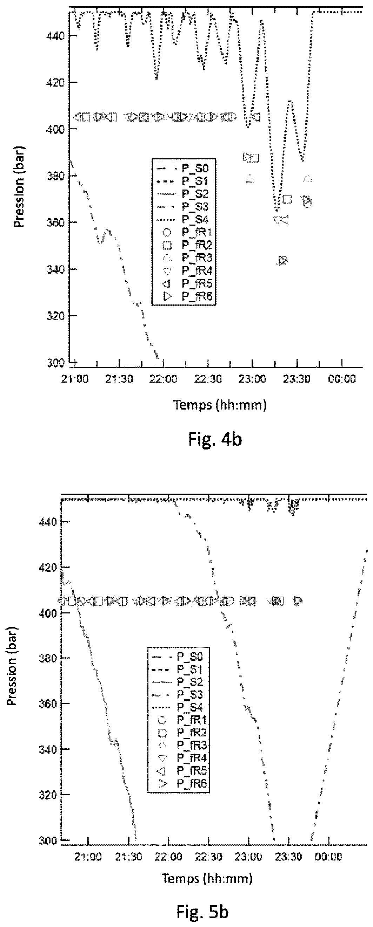

La figure 4b est un agrandissement du premier chronogramme de la figure 4a, centré autour de la fin du cinquième jour. Cet agrandissement met en évidence l'incapacité de la station à remplir l'intégralité des réservoirs à une pression de 405 bar. On voit en effet qu'à partir de l'heure 23:00, la pression finale atteinte par les six alimentateurs (P_fR1 à P_fR6) n'atteint plus 405 bar, le minimum atteignant 340 bar, pour les alimentateurs référencés P_fR1, P_fR3 et P_fR6.

Ainsi, la répartition fixe du fonctionnement de chaque bloc de compresseur n'est pas satisfaisante pour maintenir une pression maximale des contenants du bloc de stockage. Cela induit une diminution de la pression maximale délivrée par les alimentateurs du bloc d'alimentation au fil du temps.

Dans une telle configuration, la station n'est donc pas apte à satisfaire la demande précédemment décrite.

### Exemple

Dans un exemple de réalisation conforme à la présente invention, la station de remplissage comprend des composants similaires à ceux présentés dans le contre-exemple. La fourniture de la source est identique, de même que les besoins de la flotte de véhicules. La station comprend également six alimentateurs, cinq compresseurs et quatre contenants identiques à ceux présentés précédemment, ainsi que le contenant à moyenne pression directement placé en sortie de la source.

En revanche, la station comprend ici un unique bloc de compression, relié au bloc de stockage conformément à la présente description. Autrement dit, ici, chaque bloc de la station est entièrement et dynamiquement reconfigurable, et chaque compresseur peut alternativement ne pas fonctionner, fonctionner pour compresser le gaz issu de la source, ou fonctionner en consolidation de pression.

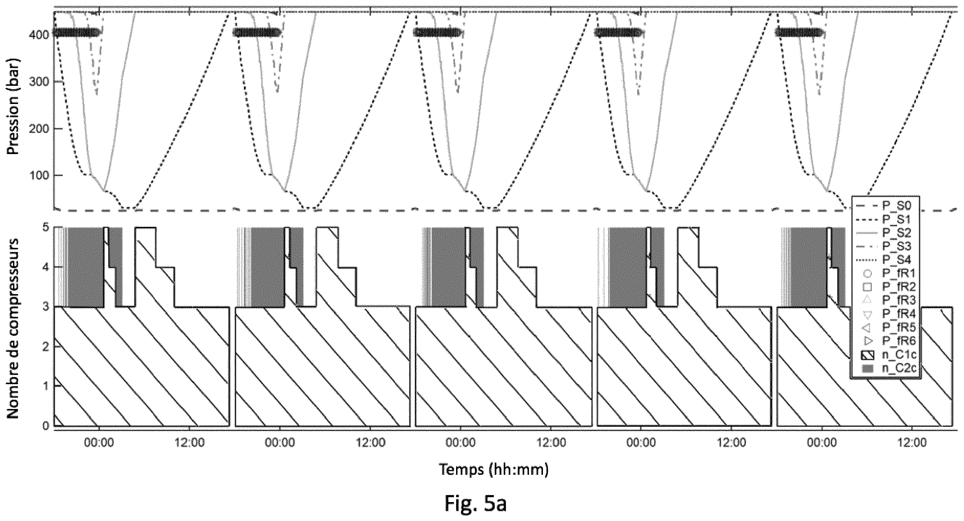

La figure 5a représente deux chronogrammes représentant l'évolution des mêmes grandeurs que celles présentées dans le contre-exemple, notamment dans la figure 4a.

Concernant le fonctionnement des compresseurs, on constate que la mise à disposition de l'ensemble des cinq compresseurs à la fois pour la compression du gaz issu de la source et pour la consolidation de pression permet de faire fonctionner constamment trois compresseurs pour la compression du gaz issu de la source (n_C1c), tandis que les deux autres compresseurs voient leur utilisation évoluer au fil du temps. En effet, dans une première période de temps, aucun des deux compresseurs n'est en fonctionnement. Dans une deuxième période de temps, les deux compresseurs sont utilisés pour la consolidation de pression (n_C2c). Dans une troisième période de temps, les deux compresseurs sont utilisés pour la compression du gaz issu de la source (n_C1c). Dans une quatrième période de temps, l'un des deux compresseurs est utilisé pour la consolidation de pression (n_C2c) tandis que l'autre est utilisé pour compresser le gaz issu de la source (n_C1c). Il existe également une quatrième période de temps au cours de laquelle l'un des deux compresseurs est utilisé pour compresser le gaz issu de la source (n_C1c) tandis que l'autre n'est pas en fonctionnement. La succession et la durée de ces périodes de temps sont tout à fait variables et dépendent des besoins de la station.

Au niveau de la pression délivrée par les alimentateurs, bien que le nombre de composants constituant la station, l'alimentation en gaz par la source et les besoins de la flotte de véhicules sont identiques, on constate que la possibilité de reconfigurer dynamiquement les différents blocs et circuits constituant la station permet de maintenir une délivrance d'une pression finale correspondant aux besoins de la flotte de véhicules. En effet, on remarque que les points P_fR1 à P_fR6, qui correspondent chacun à la pression finale délivrée à un véhicule par l'un des six alimentateurs, sont tous à la pression attendue de 405 bar, et ce au cours des trois jours consécutifs. Cette observation est particulièrement visible sur la figure 5b, qui représente un agrandissement du premier chronogramme de la figure 5a.

Ainsi, tandis que l'incapacité d'alimenter suffisamment la flotte de véhicules se répète et s'intensifie dans une configuration comprenant des blocs dédiés à un fonctionnement particulier, la possibilité offerte par la présente invention d'effectuer une reconfiguration dynamique dans l'association des différents blocs permet, dans des conditions identiques, de satisfaire durablement la demande.

De même, tandis que le contre-exemple montrait l'impossibilité de parvenir chaque jour au niveau de pression maximale du contenant représenté par la courbe P_S2, le même contenant dans la station présentée dans cet exemple atteint sa pression maximale de 450 bar chaque jour.

Bien entendu, l'invention n'est pas limitée aux modes de mise en œuvre décrits et l'on peut y apporter des variantes de réalisation sans sortir du cadre de l'invention tel que défini par les revendications.

Ainsi, bien que l'on n'ait évoqué que des refroidisseurs 41 et des alimentateurs 51 appartenant respectivement au bloc de refroidissement 40 et au bloc d'alimentation 50, la station peut également comprendre des refroidisseurs 41 et des alimentateurs 51 n'appartenant pas aux blocs décrits. En particulier, la station peut comprendre au moins un autre refroidisseur, distinct de la pluralité de refroidisseurs 41 du bloc de refroidissement 40, l'autre refroidisseurs 41 n'étant pas relié de manière systématique aux circuits de refroidissement, d'alimentation et/ou de remplissage précédemment décrits. De la même manière, la station peut comprendre au moins un autre alimentateur, distinct de la pluralité d'alimentateurs 51 du bloc d'alimentation 50.

En outre, il est également possible qu'au moins un alimentateur ou un refroidisseur, du bloc d'alimentation 50 ou de refroidissement 40 ou non, soit relié directement à une unité de fourniture de gaz 11. Cette unité de fourniture de gaz 11 peut être fixe ou mobile, et peut appartenir au bloc de fourniture 10, ou peut être une autre unité de fourniture de gaz 11, distincte du bloc de fourniture 10, ou bien une unité de fourniture de gaz 11 extérieure à la station. Dans ce cas, le gaz issu de l'unité de fourniture de gaz 11 peut ne pas circuler pas à travers le bloc de stockage 30 et/ou le bloc de compression 20.

De la même manière, les différents circuits présentés peuvent comporter en outre des composants supplémentaires, tels que des compresseurs 21 ou des refroidisseurs 41, qui appartiennent ou non aux blocs de compression 20 et de refroidissement 40.

## Revendications

1. Station de remplissage (1) pour alimenter une pluralité de véhicules (61) avec du gaz contenant de l'hydrogène issu d'une source et comportant :
- un bloc de stockage (30) comprenant une pluralité de contenants (31) pour stocker le gaz à haute pression ;
- un bloc de compression (20) comprenant une pluralité de compresseurs (21) pour augmenter la pression du gaz à destination du bloc de stockage (30) ;
- un bloc d'alimentation (50) comprenant au moins un alimentateur (51) destiné à alimenter un véhicule (61) de la pluralité de véhicules (61) ;
la station de remplissage (1) comporte également :
- un circuit de stockage (321) pour faire circuler le gaz du bloc de compression (20) vers le bloc de stockage (30), le circuit de stockage (321) comprenant un réseau de conduits de stockage (331) reliant chaque compresseur (21) du bloc de compression (20)à chaque contenant (31) du bloc de stockage (30) et au moins un distributeur de stockage (341) pour sélectivement associer les compresseurs (21) et les contenants (31) ;
- un circuit de recharge (322) pour faire circuler le gaz du bloc de stockage (30) vers le bloc de compression (20), le circuit de recharge (322) comprenant un réseau de conduits de recharge (332) reliant chaque contenant (31) du bloc de stockage (30) à chaque compresseur (21) du bloc de compression (20) et au moins un distributeur de recharge (342) pour sélectivement associer les contenants (31) et les compresseurs (21) ;
- des moyens de commande pour commander les distributeurs de stockage (341) et de recharge (342), lesdits moyens de commande étant configurés pour permettre un reconfiguration dynamique de la station de remplissage de sorte que chaque composant puisse être employé en complément ou en remplacement d'un autre.

2. Station de remplissage (1) selon la revendication précédente dans laquelle le bloc d'alimentation (50) comprend une pluralité d'alimentateurs (51).

3. Station de remplissage (1) selon la revendication précédente, comportant un circuit d'alimentation (52) pour faire circuler le gaz du bloc de stockage (30) vers le bloc d'alimentation (50), le circuit d'alimentation (52) comprenant un réseau de conduits d'alimentation (53) reliant chaque contenant (31) du bloc de stockage (30) à chaque alimentateur (51) du bloc d'alimentation (50) et au moins un distributeur d'alimentation (54) pour sélectivement associer les contenants (31) et les alimentateurs (51), les moyens de commande étant également configurés pour commander le distributeur d'alimentation (54).

4. Station de remplissage (1) selon l'une des revendications 1 ou 2 comprenant en outre un bloc de refroidissement (40) comprenant au moins un refroidisseur (41) pour diminuer la température du gaz.

5. Station de remplissage (1) selon la revendication précédente dans laquelle le bloc de refroidissement (40) comprend une pluralité de refroidisseurs (41).

6. Station de remplissage (1) selon la revendication précédente prise en combinaison avec l'une des revendications 2 ou 3, comportant un circuit de refroidissement (42) pour faire circuler le gaz du bloc d'alimentation (50) vers le bloc de refroidissement (40), le circuit de refroidissement (42) comprenant un réseau de conduits de refroidissement (43) reliant chaque alimentateur (51) du bloc d'alimentation (50) à chaque refroidisseur (41) du bloc de refroidissement (40) et au moins un distributeur de refroidissement (44) pour sélectivement associer les contenants (31) et les alimentateurs (51), les moyens de commande étant également configurés pour commander le distributeur de refroidissement (44).

7. Station de remplissage (1) selon la revendication 5, comportant un circuit de refroidissement (42) pour faire circuler le gaz du bloc de stockage (30) vers le bloc de refroidissement (40), le circuit de refroidissement (42) comprenant un réseau de conduits de refroidissement (43) reliant chaque contenant (31) du bloc de stockage (30) à chaque refroidisseur (41) du bloc de refroidissement (40) et au moins un distributeur de refroidissement (44) pour sélectivement associer les contenants (31) et les refroidisseurs (41), les moyens de commande étant également configurés pour commander le distributeur de refroidissement (44).

8. Station de remplissage (1) selon la revendication précédente en combinaison avec la revendication 2, comportant un circuit d'alimentation (52) pour faire circuler le gaz du bloc de stockage (30) vers le bloc d'alimentation (50), le circuit d'alimentation (52) comprenant un réseau de conduits d'alimentation (53) reliant chaque contenant (31) du bloc de stockage (30) à chaque alimentateur (51) du bloc d'alimentation (50) et au moins un distributeur d'alimentation (54) pour sélectivement associer les refroidisseurs (41) et les alimentateurs (51), les moyens de commande étant également configurés pour commander le distributeur d'alimentation (54).

9. Station de remplissage (1) selon l'une des revendications précédentes comprenant en outre un bloc de fourniture (10), comprenant au moins une unité de fourniture de gaz (11), et formant la source de laquelle est issu le gaz.

10. Station de remplissage (1) selon la revendication précédente dans laquelle le bloc de fourniture (10) comprend une pluralité d'unités de fourniture de gaz (11), la station de remplissage (1) comportant un circuit de compression (22) pour faire circuler le gaz du bloc de fourniture (10) vers le bloc de compression (20), le circuit de compression (22) comprenant un réseau de conduits de compression (23) reliant chaque unité de fourniture de gaz (11) du bloc de fourniture (10) à chaque compresseur (21) du bloc de compression (20) et au moins un distributeur de compression (24) pour sélectivement associer les unités de fourniture de gaz (11) et les compresseurs (21), les moyens de commande étant également configurés pour commander le distributeur de compression (24).

11. Station de remplissage (1) selon l'une des revendications 9 ou 10 dans laquelle au moins une unité de fourniture de gaz (11) du bloc de fourniture (10) est une unité de production d'hydrogène fixe ou mobile.

12. Station de remplissage (1) selon la revendication précédente dans laquelle l'unité de production d'hydrogène est un électrolyseur.

13. Station de remplissage (1) selon l'une des revendications 9 à 12 dans laquelle au moins une unité de fourniture de gaz (11) du bloc de fourniture (10) est une unité de stockage mobile.

14. Station de remplissage (1) selon l'une des revendications précédentes comprenant au moins un autre contenant, distinct de la pluralité de contenants (31) du bloc de stockage (30), l'autre contenant (31) n'étant pas relié de manière systématique à chaque compresseur (21) de la pluralité de compresseurs (21) du bloc de compression (20).

15. Station de remplissage (1) selon l'une des revendications précédentes comprenant au moins un autre compresseur, distinct de la pluralité de compresseurs (21) du bloc de compression (20), l'autre compresseur n'étant pas relié de manière systématique à chaque contenant (31) de la pluralité de contenants (31) du bloc de stockage (30).

## Patentansprüche

1. Füllstation (1) zum Versorgen einer Vielzahl von Fahrzeugen (61) mit einem Gas, das Wasserstoff aus einer Quelle enthält, die Folgendes aufweist:
einer Speichereinheit (30) mit einer Vielzahl von Behältern (31) zum Speichern von Gas unter hohem Druck;
einer Kompressoreinheit (20) mit einer Vielzahl von Kompressoren (21) zum Erhöhen des Drucks des für die Speichereinheit (30) bestimmten Gases;
eine Versorgungseinheit (50) mit mindestens einer Versorgungsvorrichtung (51) zur Versorgung eines Fahrzeugs (61) aus der Vielzahl von Fahrzeugen (61);
wobei die Füllstation (1) ferner aufweist:
einen Speicherkreislauf (321) zum Zirkulieren des Gases von der Kompressoreinheit (20) zur Speichereinheit (30), wobei der Speicherkreislauf (321) ein Netzwerk von Speicherrohren (331), die jeden Kompressor (21) der Kompressoreinheit (20) mit jedem Behälter (31) der Speichereinheit (30) verbinden, aufweist, sowie mindestens einen Speicherverteiler (341) zum selektiven Zuordnen der Kompressoren (21) und der Behälter (31);
einen Füllkreislauf (322) zum Zirkulieren des Gases von der Speichereinheit (30) zur Kompressoreinheit (20), wobei der Füllkreislauf (322) ein Netzwerk von Füllrohren (332), die jeden Behälter (31) der Speichereinheit (30) mit jedem Kompressor (21) der Kompressoreinheit (20) verbinden, aufweist, sowie mindestens einen Füllverteiler (342) zum selektiven Zuordnen der Behälter (31) und der Kompressoren (21);
Steuermittel zum Steuern der Speicher- (341) und Füllverteiler (342), wobei die Steuermittel so konfiguriert sind, dass sie eine dynamische Neukonfiguration der Füllstation ermöglichen, so dass jede Komponente zusätzlich oder anstelle einer anderen verwendet werden kann.

2. Füllstation (1) nach dem vorstehenden Anspruch, wobei die Versorgungseinheit (50) mehrere Versorgungsvorrichtungen (51) aufweist.

3. Füllstation (1) nach dem vorstehenden Anspruch, aufweisend einen Versorgungskreislauf (52) zum Zirkulieren des Gases von der Speichereinheit (30) zur Versorgungseinheit (50), wobei der Versorgungskreislauf (52) ein Netzwerk von Versorgungsleitungen (53), die jeden Behälter (31) der Speichereinheit (30) mit jeder Versorgungsvorrichtung (51) der Versorgungseinheit (50) verbinden, aufweist, sowie mindestens einen Versorgungsverteiler (54) zum selektiven Zuordnen der Behälter (31) und der Versorgungsvorrichtungen (51), wobei die Steuermittel auch zum Steuern des Versorgungsverteilers (54)konfiguriert sind.

4. Füllstation (1) nach einem der Ansprüche 1 oder 2, die ferner eine Kühleinheit (40) aufweist, die mindestens einen Kühler (41) zum Verringern der Temperatur des Gases aufweist.

5. Füllstation (1) nach dem vorstehenden Anspruch, wobei die Kühleinheit (40) mehrere Kühler (41) aufweist.

6. Füllstation (1) nach dem vorstehenden Anspruch in Kombination mit einem der Ansprüche 2 oder 3, aufweisend einen Kühlkreislauf (42) zum Zirkulieren des Gases von der Versorgungseinheit (50) zur Kühleinheit (40), wobei der Kühlkreislauf (42) ein Netzwerk von Kühlrohren (43), die jede Versorgungseinrichtung (51) in der Versorgungseinheit (50) mit jedem Kühler (41) in der Kühleinheit (40) verbinden, aufweist, sowie mindestens einen Kühlverteiler (44) zum selektiven Zuordnen der Behälter (31) und der Versorgungseinrichtungen (51), wobei die Steuermittel auch zum Steuern des Kühlverteilers (44) konfiguriert sind.

7. Füllstation (1) nach Anspruch 5, aufweisend einen Kühlkreislauf (42) zum Zirkulieren des Gases aus der Speichereinheit (30) zur Kühleinheit (40), wobei der Kühlkreislauf (42) ein Netzwerk von Kühlrohren (43), die jeden Behälter (31) in der Speichereinheit (30) mit jedem Kühler (41) in der Kühleinheit (40) verbinden, aufweist sowie mindestens einen Kühlverteiler (44) zum selektiven Zuordnen der Behälter (31) und der Kühler (41), wobei die Steuermittel auch zum Steuern des Kühlverteilers (44) konfiguriert sind.

8. Füllstation (1) nach dem vorstehenden Anspruch in Kombination mit Anspruch 2, aufweisend einen Versorgungskreislauf (52) zum Zirkulieren des Gases von der Speichereinheit (30) zur Versorgungseinheit (50), wobei der Versorgungskreislauf (52) ein Netzwerk von Versorgungsleitungen (53), die jeden Behälter (31) der Speichereinheit (30) mit jeder Versorgungsvorrichtung (51) der Versorgungseinheit (50) verbinden, und mindestens einen Versorgungsverteiler (54) zum selektiven Zuordnen der Kühler (41) und der Versorgungsvorrichtungen (51) aufweist, wobei die Steuermittel auch zum Steuern des Versorgungsverteilers (54) konfiguriert sind.

9. Füllstation (1) nach einem der vorstehenden Ansprüche, die ferner eine Versorgungseinheit (10) aufweist, die mindestens eine Gasversorgungseinheit (11) aufweist und die die Quelle bildet, aus der das Gas stammt.

10. Füllstation (1) nach dem vorstehenden Anspruch, wobei die Versorgungseinheit (10) mehrere Gasversorgungseinheiten (11) aufweist, wobei die Füllstation (1) einen Kompressionskreislauf (22) zum Zirkulieren von Gas aus der Versorgungseinheit (10) zur Kompressoreinheit (20) aufweist, wobei der Kompressionskreislauf (22) ein Netzwerk von Kompressionsrohren (23), die jede Gasversorgungseinheit (11) der Versorgungseinheit (10) mit jedem Kompressor (21) der Kompressoreinheit (20) verbinden, aufweist, sowie mindestens einen Kompressionsverteiler (24) zum selektiven Zuordnen der Gasversorgungseinheiten (11) und der Kompressoren (21), wobei die Steuermittel auch zum Steuern des Kompressionsverteilers (24) konfiguriert sind.

11. Füllstation (1) nach einem der Ansprüche 9 oder 10, wobei mindestens eine Gasversorgungseinheit (11) der Versorgungseinheit (10) eine stationäre oder mobile Wasserstofferzeugungseinheit ist.

12. Füllstation (1) nach dem vorstehenden Anspruch, wobei die Wasserstofferzeugungseinheit ein Elektrolyseur ist.

13. Füllstation (1) nach einem der Ansprüche 9 bis 12, wobei mindestens eine Gasversorgungseinheit (11) der Versorgungseinheit (10) eine mobile Speichereinheit ist.

14. Füllstation (1) nach einem der vorstehenden Ansprüche, aufweisend mindestens einen weiteren Behälter, der von den mehreren Behältern (31) der Speichereinheit (30) getrennt ist, wobei der weitere Behälter (31) nicht systematisch mit jedem Kompressor (21) der mehreren Kompressoren (21) der Kompressoreinheit (20) verbunden ist.

15. Füllstation (1) nach einem der vorstehenden Ansprüche, aufweisend mindestens einen weiteren Kompressor, der von den mehreren Kompressoren (21) der Kompressoreinheit (20) getrennt ist, wobei der weitere Kompressor nicht systematisch mit jedem Behälter (31) der mehreren Behälter (31) der Speichereinheit (30) verbunden ist.

## Claims

1. Filling station (1) for supplying a plurality of vehicles (61) with a gas containing hydrogen originating from a source and comprising:
a storage unit (30) comprising a plurality of containers (31) for storing gas at high pressure;
a compression unit (20) comprising a plurality of compressors (21) for increasing the pressure of the gas intended for the storage unit (30);
a supply unit (50) comprising at least one supply device (51) intended to supply a vehicle (61) of the plurality of vehicles (61);
the filling station (1) further comprising:
a storage circuit (321) for circulating the gas from the compression unit (20) to the storage unit (30), the storage circuit (321) comprising a network of storage pipes (331) connecting each compressor (21) of the compression unit (20) to each container (31) of the storage unit (30) and at least one storage distributor (341) for selectively associating the compressors (21) and the containers (31);
a filling circuit (322) for circulating the gas from the storage unit (30) to the compression unit (20), the filling circuit (322) comprising a network of filling pipes (332) connecting each container (31) of the storage unit (30) with each compressor (21) of the compression unit (20) and at least one filling distributor (342) for selectively associating the containers (31) and the compressors (21);
control means for controlling the storage (341) and filling (342) distributors, said control means being configured to allow a dynamic reconfiguration of the filling station so that each component can be used in addition or instead another.

2. Filling station (1) according to the preceding claim, wherein the supply unit (50) comprises a plurality of supply devices (51).

3. Filling station (1) according to the preceding claim, comprising a supply circuit (52) for circulating the gas from the storage unit (30) to the supply unit (50), the supply circuit (52) comprising a network of supply pipes (53) connecting each container (31) of the storage unit (30) to each supply device (51) of the supply unit (50) and at least one supply distributor (54) for selectively associating the containers (31) and the supply devices (51), the control means also being configured for controlling the supply distributor (54).

4. Filling station (1) according to one of claims 1 or 2, further comprising a cooling unit (40) comprising at least one cooler (41) for reducing the temperature of the gas.

5. Filling station (1) according to the preceding claim, wherein the cooling unit (40) comprises a plurality of coolers (41).

6. Filling station (1) according to the preceding claim in combination with one of claims 2 or 3, comprising a cooling circuit (42) for circulating the gas from the supply unit (50) to the cooling unit (40), the cooling circuit (42) comprising a network of cooling pipes (43) connecting each supply device (51) in the supply unit (50) to each cooler (41) in the cooling unit (40) and at least one cooling distributor (44) for selectively associating the containers (31) and the supply devices (51), the control means also being configured for controlling the cooling distributor (44).

7. Filling station (1) according to claim 5, comprising a cooling circuit (42) for circulating the gas from the storage unit (30) to the cooling unit (40), the cooling circuit (42) comprising a network of cooling pipes (43) connecting each container (31) in the storage unit (30) to each cooler (41) in the cooling unit (40) and at least one cooling distributor (44) for selectively associating the containers (31) and the coolers (41), the control means also being configured for controlling the cooling distributor (44).

8. Filling station (1) according to the claim preceding claim in combination with claim 2, comprising a supply circuit (52) for circulating the gas from the storage unit (30) to the supply unit (50), the supply circuit (52) comprising a network of supply pipes (53) connecting each container (31) of the storage unit (30) to each supply device (51) of the supply unit (50) and at least one supply distributor (54) for selectively associating the coolers (41) and the supply devices (51), the control means also being configured for controlling the supply distributor (54).

9. Filling station (1) according to one of the preceding claims, further comprising a supply unit (10), comprising at least one gas supply unit (11), and forming the source from which the gas originates.

10. Filling station (1) according to the preceding claim, wherein the supply unit (10) comprises a plurality of gas supply units (11), the filling station (1) comprising a compression circuit (22) for circulating gas from the supply unit (10) to the compression unit (20), the compression circuit (22) comprising a network of compression pipes (23) connecting each gas supply unit (11) of the supply unit (10) to each compressor (21) of the compression unit (20) and at least one compression distributor (24) for selectively associating the gas supply units (11) and the compressors (21), the control means also being configured for controlling the compression distributor (24).

11. Filling station (1) according to one of claims 9 or 10, wherein at least one gas supply unit (11) of the supply unit (10) is a stationary or mobile hydrogen production unit.

12. Filling station (1) according to the preceding claim, wherein the hydrogen production unit is an electrolyzer.

13. Filling station (1) according to one of claims 9 to 12, wherein at least one gas supply unit (11) of the supply unit (10) is a mobile storage unit.

14. Filling station (1) according to one of the preceding claims, comprising at least one other container, separate from the plurality of containers (31) of the storage unit (30), the other container (31) not being systematically connected to each compressor (21) of the plurality of compressors (21) of the compression unit (20).

15. Filling station (1) according to one of the preceding claims, comprising at least one other compressor, separate from the plurality of compressors (21) of the compression unit (20), the other compressor not being systematically connected to each container (31) of the plurality of containers (31) of the storage unit (30).
